(19) Europäisches Patentamt
European Patent Office
Office européen des brevets

(11) EP 1 197 745 A1

(12) EUROPEAN PATENT APPLICATION
published in accordance with Art. 158(3) EPC

(43) Date of publication:
**17.04.2002 Bulletin 2002/16**

(21) Application number: **01917606.4**

(22) Date of filing: **29.03.2001**

(51) Int Cl.[7]: **G01N 21/94**, G01M 11/00

(86) International application number:
**PCT/JP01/02641**

(87) International publication number:
**WO 01/73411 (04.10.2001 Gazette 2001/40)**

(84) Designated Contracting States:
**AT BE CH CY DE DK ES FI FR GB GR IE IT LI LU MC NL PT SE TR**

(30) Priority: **29.03.2000 JP 2000092491**

(71) Applicant: **SEIKO EPSON CORPORATION**
**Shinjuku-ku, Tokyo 163-0811 (JP)**

(72) Inventors:
- **SAITO, Mikio**
**Sakata-shi, Yamagata 998-0194 (JP)**
- **GOTO, Noboru**
**Sakata-shi, Yamagata 998-0194 (JP)**
- **ISHIKAWA, Toshiaki**
**Sakata-shi, Yamagata 998-0194 (JP)**

(74) Representative: **Sturt, Clifford Mark et al**
**Miller Sturt Kenyon**
**9 John Street**
**London WC1N 2ES (GB)**

# (54) THROUGH HOLE INSPECTING METHOD AND DEVICE

(57) There are provided a method and apparatus for examining through holes, in which determinations as to whether the examined through hole are good or bad can be accurately made at low costs. A light source and a sensor camera having a plurality of imaging elements are disposed with a table on which a work piece having through holes is mounted being interposed between the light source and the sensor camera. Light passing through the through holes is imaged by the sensor camera, wherein the sensor camera is set such that a focal point of the sensor camera is shifted from the surface of the work piece to thereby apparently expand an area of the image of the passing light.

Fig. 1 (1)

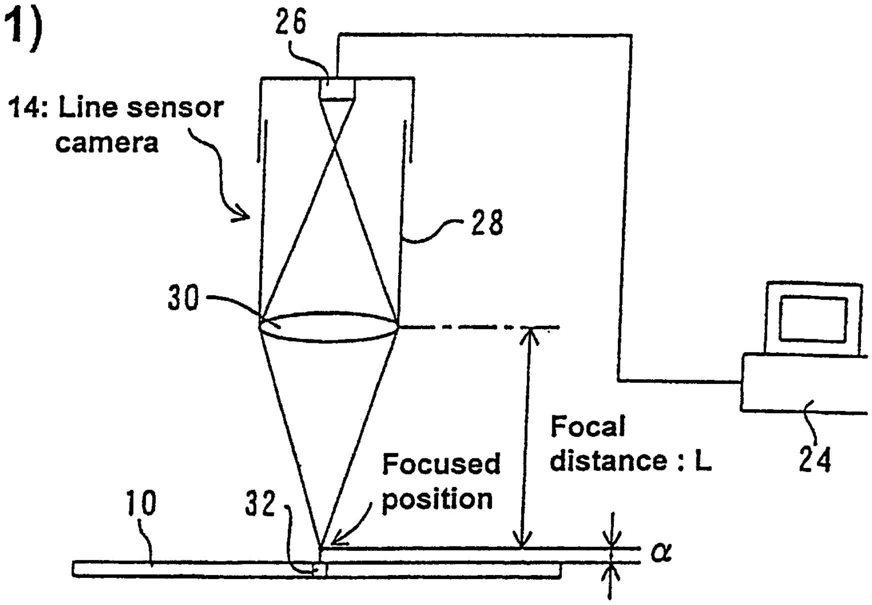


Out-of-focus state (work piece surface + α)



Printed by Jouve, 75001 PARIS (FR)

## Description

### TECHNICAL FIELD

The present invention relates to a method and an apparatus for examining through holes, and more particularly to a method and an apparatus that are suitable for examining differences or uniformity of minute through holes each having a diameter of several ten micron millimeters that are arranged in a work piece or for examining the presence or absence of foreign matters in the through holes.

### BACKGROUND TECHNOLOGY

Conventionally, examinations on through holes each having a diameter of several ten ~ several hundred micron millimeters are generally conducted to check if a correct number of the through holes are opened, if the sizes of the through holes are uniform, if any foreign matters are present in the through holes, and the like. Optical methods are generally conducted for such examinations. For example, an area sensor camera is used to photograph an examining surface of a work piece where through holes are formed, and an image processing apparatus is used to compare the result with a reference value to make a determination as to whether or not the result is good. However, in the conventional example described above, beside the image processing apparatus, an auto-focusing unit, a microscope, and electron beams are required, whereby the examination is conducted for each one of the through holes, or with an expanded image that is expanded at a high level of magnification.

However, the conventional method described above has the following problems. When the number of through holes increases, it takes too long to conduct the examination. When a highly magnified image is to be taken, demands for mechanical precision of the apparatus become stricter, and therefore its manufacturing cost becomes higher. In other words, because the depth of focus becomes narrower, an automatic focusing system, an automatic-control system for camera's z-axis, and the like are required. Also, because the range of field of view becomes narrower, the table requires a high positioning accuracy.

Also, when foreign matters in through holes are examined by the photographing method using the conventional area sensor camera, the number of pixels is limited and therefore its resolving power is limited. In particular, when foreign matters are light-transmissive, their recognition is extremely difficult, and therefore there are possibilities to erroneously detect good products as bad products.

The present invention focuses on the problems of the conventional art described above, and it is an object of the present invention to provide a method and an apparatus for examining through holes, which can make determinations with low costs and high accuracy as to whether results of through-hole examinations are good or bad.

### DISCRIPTION OF THE INVENTION

To achieve the object described above, a through hole examination method in accordance with the present invention is characterized in that light is irradiated from one side of a work piece having a through hole, and passing light is detected by imaging the passing light from the other side of the work piece by a sensor camera having a plurality of imaging elements, wherein the examination is conducted by imaging with an imaging focal point of the sensor camera being shifted with respect to the surface of the work piece.

In accordance with the present invention, light passing through a through hole is imaged by the sensor camera, and the imaging is conducted with the imaging focal point of the sensor camera being shifted with respect to the detected through hole, to thereby conduct the examination with an area of the imaged passing light being expanded. As a result, the examination can be effectively and stably conducted with high accuracy to determine the uniformity of formed through holes and to detect presence of foreign matters in through holes.

Also, when an examination is conducted by irradiating light from one side of a work piece having a plurality of through holes, and imaging passing light from the other side of the work piece by a sensor camera having a plurality of imaging elements, the imaging may be conducted with the focal point of the sensor camera being shifted from the surface of the work piece, and areas of obtained images of the through holes may be compared with one another to examine differences or uniformity of the through holes or examine foreign matters in the through holes.

In the embodiments described above, a line sensor camera may preferably be used as the sensor camera, and the imaging may preferably be conducted by shifting the camera relative to and in parallel with the work piece.

Also, in the embodiments described above, the imaging focal point of the sensor camera may preferably be shifted from the surface of the work piece to conduct imaging so that an area of an image of the passing light is expanded.

Furthermore, a through hole examination apparatus in accordance with the present invention is characterized in comprising a light source, a sensor camera having a plurality of imaging elements, a table on which a work piece having through holes is mounted being interposed between the light source and the sensor camera, wherein the sensor camera can image light passing through the through holes, and a relative position between the sensor camera and the surface of the work piece is set such that the imaging focal point of the sensor camera is shifted from the surface of the work piece,

and an image processing device that receives imaging signals provided by the sensor camera and performs a process for comparing imaged areas.

Also, the table may be formed with a parallel displacement table, and the sensor camera may be formed with a line sensor camera.

## BRIEF DESCRIPTION OF THE DRAWINGS

Fig. 1 (1) shows a structure of an examination principle using a sensor camera disposed in a through hole examination apparatus in accordance with one embodiment of the present invention; and Fig. 1 (2) shows an example of image data taken. Fig. 2-(1) shows a structure in which a sensor camera is disposed in a comparison example; and Fig. 2 (2) shows an example of image data taken. Fig. 3 shows a block diagram of components of a through hole examination apparatus in accordance with one embodiment of the present invention. Fig. 4 shows a perspective view of Fig. 3.

## BEST MODE EMBODIMENTS OF THE PRESENT INVENTION

A method and an apparatus for examining through holes in accordance with an embodiment of the present invention are described in detail with reference to the accompanying drawings. In the embodiment, the present invention is applied to an example in which a work piece having a plurality of through holes formed therein is subject to examination, and foreign matters in the through holes are examined.

Fig. 3 shows a block diagram of a structure of a through hole examination apparatus in accordance with one embodiment of the present invention. Fig. 4 shows a perspective view of components of a main part of the apparatus. As shown in these figures, in principle, a light source 12 is disposed below a work piece 10 in a plate shape having a plurality of through holes arranged in rows, and light is irradiated toward the through holes from the rear side of the work piece 10. On the other hand, a sensor camera having a plurality of imaging elements is disposed above the work piece 10, and the through holes are placed in the field of view of the sensor camera. Light passing through the through holes is received by the imaging elements, such that an image corresponding to the passing light is obtained. Therefore, the work piece 10 is irradiated with light by the light source 12 from one plane side, and a plane image of the passing light is taken by the sensor camera that is disposed on the opposite side of the light source 12, such that images are taken. In other words, detection of foreign matters is conducted using the following characteristic. If there is a foreign matter in a through hole, light is blocked by the foreign matter, and an area value representative of the received light becomes smaller. It is noted that the example shown in the figure uses three work pieces 10 that are examined at the same time. Accordingly, three pairs of light sources 12 and sensor cameras are provided.

In one embodiment, a line sensor camera is used as the sensor camera to take images. The line sensor camera includes a plurality of CCD elements arranged in a line that provides about 5000 pixels for the width of the field of view. By the use of the line sensor camera 14, a higher resolving power is obtained to the extent that the resolving power per one pixel can be improved up to about 3μm. The line sensor camera 14 is shifted relative to and parallel with the work piece 10 to take plane images. The work piece 10 is mounted on an XY table 16, and moved for scanning in a direction perpendicular to the column of the imaging elements.

A fixing jig 18 is used to clamp the work piece 10 to place the work piece 10 at a predetermined fixed position on the XY table 16. The fixing jig 18 is formed from a lower jig 18D and an upper jig 18U, and is positioned and affixed at a specified location on the table by an appropriate fixing device. Slits 20 corresponding to the columns of the through holes in the work piece 10 are formed in the fixing jig 18, such that light passes through the slits 20 and is taken by the line sensor camera 14. Also, the light source 12 disposed below the XY table 16 is formed from a line-like lighting. Further, a diffuser plate 22 is mounted on a lower surface of the table to mitigate irregularities in the light intensity of light emitted from the light source 12 so that the light is uniformly irradiated on the column of the through holes.

By the structure described above, the work piece 10 is moved by the XY table 16, and light passing through the column of the through holes is received by the CCD elements of the line sensor camera 14 to photograph an image. Data representative of the image is inputted in an image processing device 24 to determine the presence or the absence of foreign matters in the through hole. When an image is photographed, in accordance with the present embodiment, the position of focal point of the line sensor camera 14 is not concurred on the surface of the work piece 10, but is set at a position shifted from the surface of the work piece. In other words, the line sensor camera 14 is positioned at a distance (L+$\alpha$) from the through hole of the work piece 10, which is longer than a focal length L, in order to apparently expand the area of the photographed image of the passing light. An illustration of the principle is shown in Fig. 1, and a comparison example is show in Fig. 2. The line sensor camera 14 is equipped with a sensor main body 26 in which a plurality of CCD elements are linearly arranged, a close-up photographing ring section 28 and an optical lens 30. In general, as shown in Fig. 2 (1), the close-up photographing ring 28 is adjusted such that the sensor camera is set at a position (at a focal distance L) with its focal point being concurred with a plane of an opening of the through hole 32 formed in the work piece 10, to photograph an image corresponding to the size of the opening of the through hole 32. However, in accordance with the embodiment of the present invention, as shown in Fig. 1 (1), a Z-axis adjusting device of the camera, such as a close-up photographing ring is adjusted, such that the focal point is located at a position above the surface of the work piece 10 (toward the sensor side). In the photographed image under a focused condition, a region in which the passing light is blocked by a foreign matter in the through hole is detected as an area of, for example, two pixels as shown in Fig. 2 (2). In contrast, in accordance with the embodiment of the present invention, as shown in Fig. 1 (2), the region can be detected as an area of 8 pixels. In other words, under the focused condition, only the light passing through the opening section of the through hole 32 is detected. However, under an out-of-focus condition in accordance with the embodiment of the present invention, although the light intensity per unit area reduces, an area of a photographed image of the light passed through the through hole 32 is enlarged and, in a similar manner, an area corresponding to the foreign matter is apparently enlarged. By the structure described above, a measured value, in other words, an area value of passing light amount X is defined by the following formula:

$$X = (S - \alpha)\ \beta,$$

where S is an area value of the through hole 32, $\alpha$ is an area value of a foreign matter, and $\beta$ is an area expansion coefficient ($\beta > 1$) due to the out-of-focus effect. When $\beta = 1$, the focal point concurs with the surface of the work piece.

In this manner, the position of the focal point of the line sensor camera 14 is not concurred with the through hole 32 of the work piece 10 such that it is shifted from the through hole 32 of the work piece 10 to positively create an out-of-focus condition. As a result, the photographed image is apparently expanded, whereby the detection power to detect foreign matters is increased. Accordingly, a work piece 10 having a through hole 32 without any abnormality is used to photograph an image under an out-of-focus condition, and area data for the photographed image is stored as a reference value. The stored area data is compared with area data for a measuring image photographed under the same out-of-focus condition. Due to the presence and the absence of foreign matters, a characteristic difference between the through holes 32 becomes large. In this manner, the detection power for detecting foreign matters is substantially improved.

Alternatively, the comparison with the data obtained by the reference work piece may not be performed. Instead, an area difference among data for apparently expanded images of the plural through holes 32 arranged in columns is obtained, and the presence or the absence of a foreign matter may be determined based on their large-small relation. By doing so, error detection caused by individual differences among the individual work pieces 10 can be prevented. Furthermore, in addition to examining foreign matters in the through holes, uniformity of the plural through holes 32 can also be determined.

The embodiment described above shows an example in which a line sensor camera is used as the sensor camera. However, in the present examination method, an area sensor, in other words, an ordinary CCD camera can also be used to make determinations for the following reasons. In the present process, an image is photographed under an out-of-focus condition to apparently expand the image. Accordingly, even when a sensor having a relatively low resolving power is used, good determinations can be made. It goes without saying that the present invention is applicable to imaging that is conducted by a sensor using imaging elements other than CCD elements, such as CMOS semiconductor devices.

As described above, by a method and an apparatus for examining through holes in accordance with the embodiment of the present invention, an object is detected with the focal point being shifted to place it under an out-of-focus condition. As a result, the number of pixels that represent an area of light passing through a through hole and received can be substantially increased, and a determination between a good through hole and a bad through hole can be more reliably made based on an area difference that is greater than the actual area difference. Accordingly, not only colored objects but also transparent objects can be detected. Even when a transparent foreign matter, which used to be difficult to detect, is present in a through hole, a difference between area values, which is created by a reduced light amount due to the transparent foreign matter, can be enlarged and displayed to make a determination. As a result, a determination that the presence of the foreign matter is bad can be reliably made. The size (area) of a detectable transparent foreign matter is 15% or greater than an area of a through hole. It is noted that, if foreign matters are colored, much smaller sized foreign matters can be detected.

It is noted that, by examining under an out-of-focus condition, the conditions for examining foreign matters may become strict, and deviations may occur in area values of through holes among different work pieces or at each time an image is photographed. Therefore, if threshold values are set to make determinations simply based on through hole area values, there may be possibilities of detection errors and detection failures. However, by conducting the process in which area values of adjacent through holes are compared, stable examinations can be conducted.

## Claims

1. A through hole examination method **characterized in** comprising: irradiating light from one side of a work piece having a through hole; and detecting passing light by imaging the passing light from the other side of the work piece by a sensor camera having a plurality of imaging elements, wherein the examination is conducted by imaging with an imaging focal point of the sensor camera being shifted with respect to the surface of the work piece.

2. A through hole examination method **characterized in** comprising: irradiating light from one side of a work piece having a plurality of through holes; imaging and detecting passing light from the other side of the work piece by a sensor camera having a plurality of imaging elements, wherein the imaging is conducted with a focal point of the sensor camera being shifted from the surface of the work piece to obtain images corresponding to the through holes, and areas of the images of the through holes are compared with one another to examine differences or uniformity of the through holes or examine foreign matters in the through holes.

3. A through hole examination method according to claim 1 or claim 2, wherein a line sensor camera is used as the sensor camera, and the imaging is conducted by shifting the camera relative to and in parallel with the work piece.

4. A through hole examination method according to claim 1 or claim 2, wherein the imaging focal point of the sensor camera is shifted from the surface of the work piece to conduct imaging such that an area of an image of the passing light is expanded.

5. A through hole examination apparatus comprising: a light source; a sensor camera having a plurality of imaging elements; a table on which a work piece having through holes is mounted being interposed between the light source and the sensor camera, wherein

    the sensor camera is capable of imaging light passing through the through holes, and

    a relative position between the sensor camera and the surface of the work piece is set such that an imaging focal point of the sensor camera is shifted from a surface of the work piece; and

    an image processing device that receives imaging signals provided by the sensor camera and performs a process for comparing imaged areas.

6. A through hole examination apparatus according to claim 5, wherein the table is a parallel displacement table, and the sensor camera is a line sensor camera.

Fig. 1 (1)

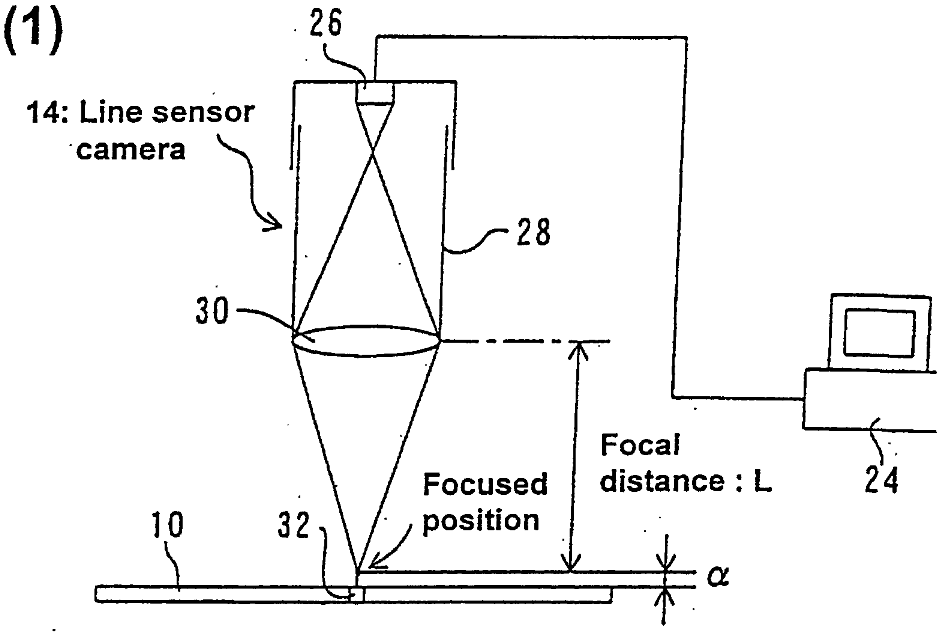


Out-of-focus state (work piece surface + α)

Fig. 1 (2)

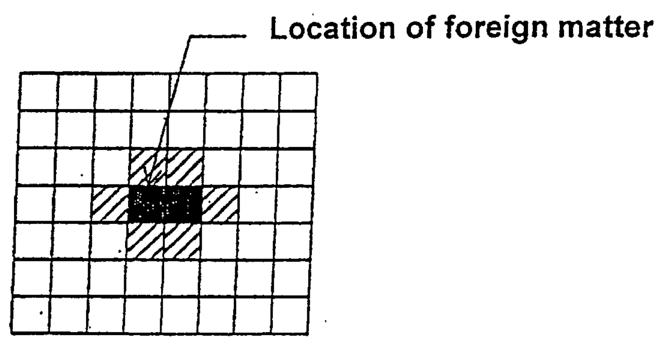


Out-of-focus condition

(Size of foreign matter: 8 pixels)

Fig. 2 (1)

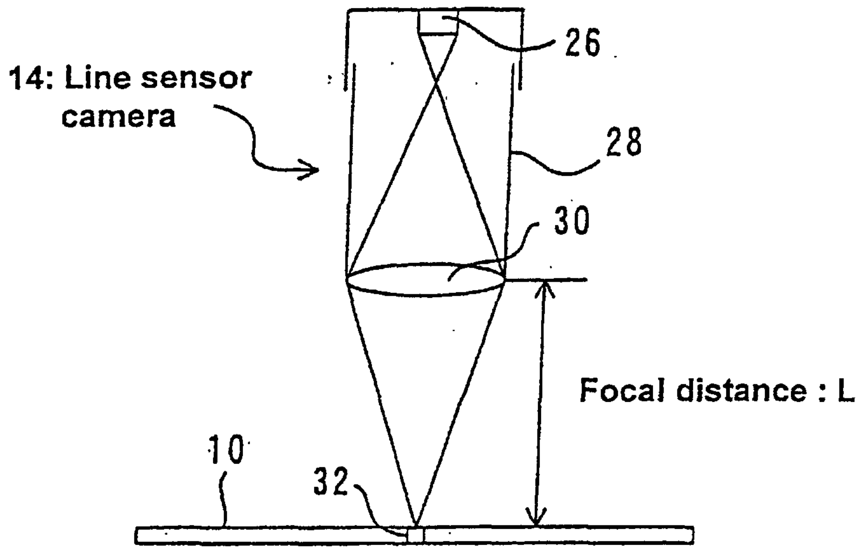


Focused state (work piece surface)

Fig. 2 (2)

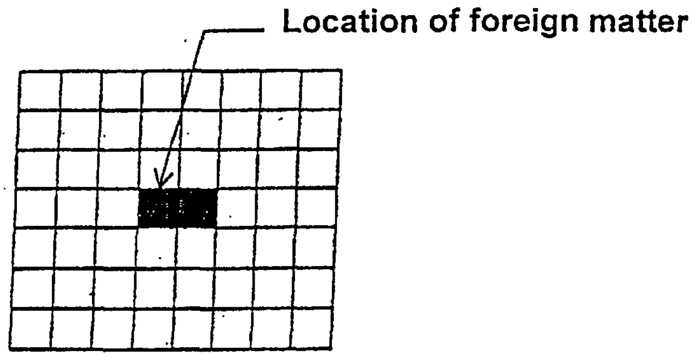


Focused condition
(Size of foreign matter : 2 pixels)

Fig. 3

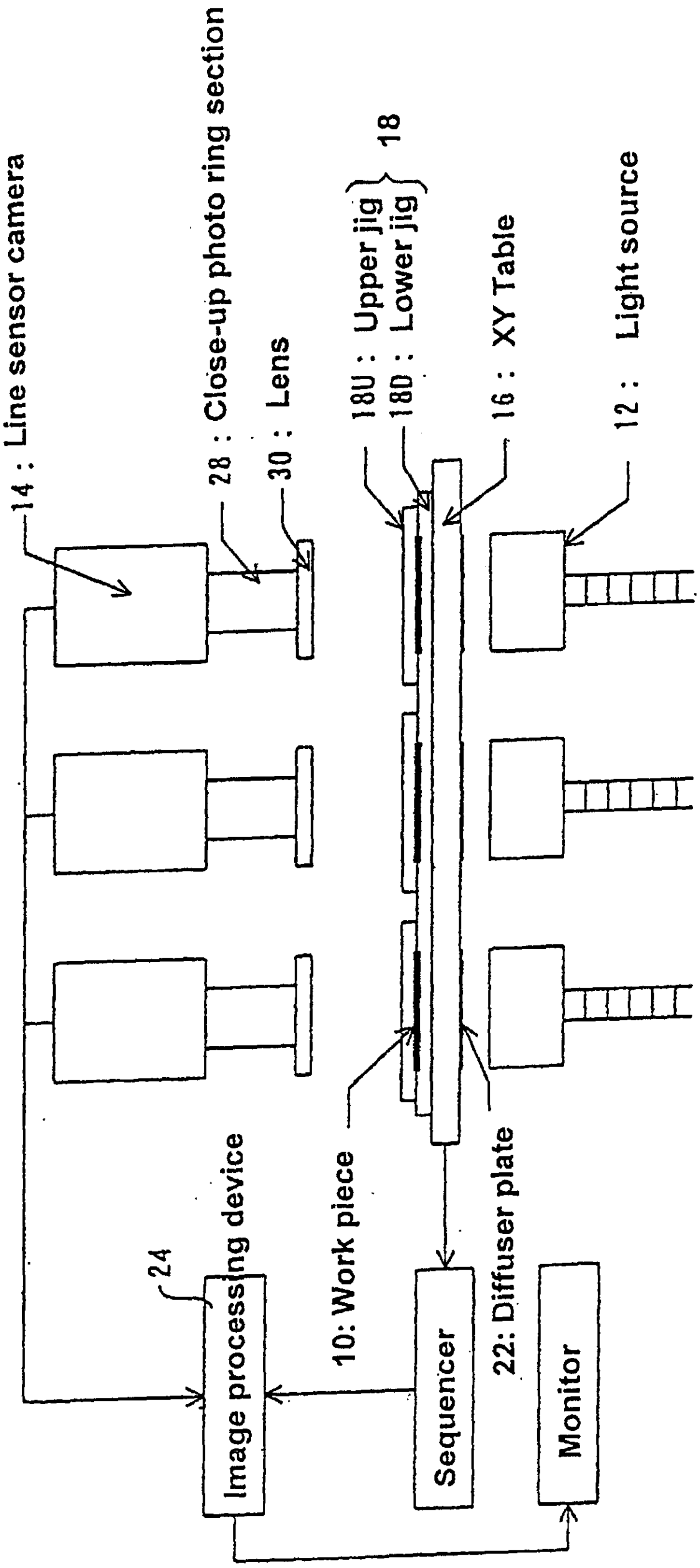
14 : Line sensor camera
28 : Close-up photo ring section
30 : Lens
18U : Upper jig
18D : Lower jig
18
16 : XY Table
12 : Light source
24
Image processing device
10: Work piece
22: Diffuser plate
Sequencer
Monitor

Fig. 4

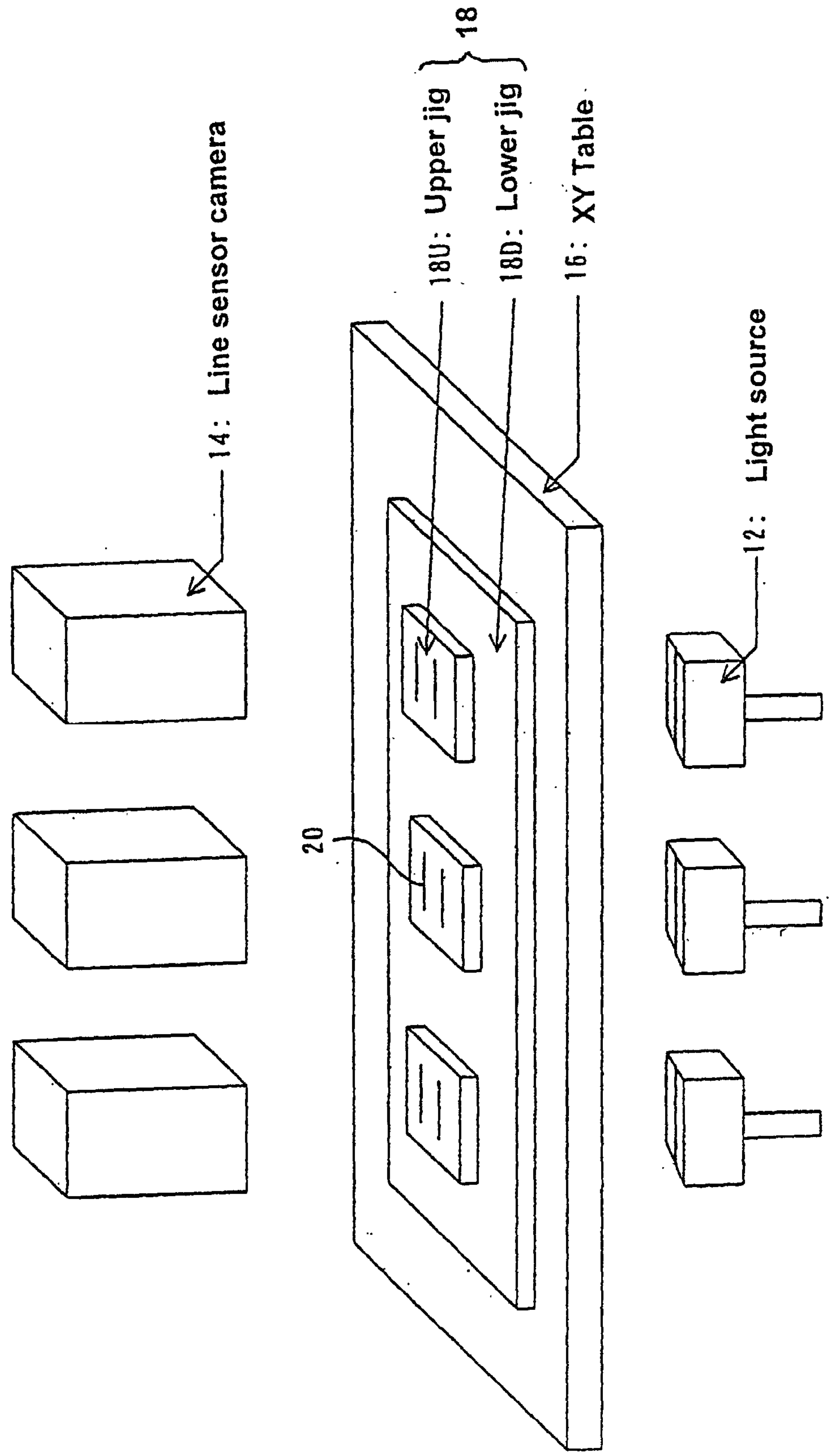
14: Line sensor camera
18
18U: Upper jig
18D: Lower jig
16: XY Table
20
12: Light source

## INTERNATIONAL SEARCH REPORT

International application No.
PCT/JP01/02641

A. CLASSIFICATION OF SUBJECT MATTER
Int.Cl$^7$ G01N 21/94, G01M11/00

According to International Patent Classification (IPC) or to both national classification and IPC

B. FIELDS SEARCHED

Minimum documentation searched (classification system followed by classification symbols)
Int.Cl$^7$ G01N 21/94, G01M11/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP, 1-307645, A (Dainippon Printing Co., Ltd.), 12 December, 1989 (12.12.89), page 8, left column, lines 14 to 18; Figs. 1 to 16 (Family: none) | 1-6 |
| Y | JP, 61-256237, A (Dainippon Printing Co., Ltd.), 13 November, 1986 (13.11.86), page 5, upper left column, line 12 to page 5, upper right column, line 8; page 6, upper right column, lines 3 to 10; Figs. 7(a), 7(b) (Family: none) | 1-6 |
| Y | JP, 6-308046, A (Dainippon Printing Co., Ltd.), 04 November, 1994 (04.11.94), Par. No. 0020; Fig. 1 (Family: none) | 1-6 |
| Y | JP, 9-210850, A (Kobe Steel, Ltd.), 15 August, 1997 (15.08.97), Par. No. 0002; Figs. 1 to 9 (Family: none) | 1-6 |
| A | JP, 6-235624, A (Hitachi, Ltd.), 23 August, 1994 (23.08.94), description; Par. Nos. 0040 to 0045; Figs. 6, 7 | 1-6 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 April, 2001 (16.04.01) | 24 April, 2001 (24.04.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

International application No.
PCT/JP01/02641

C (Continuation). DOCUMENTS CONSIDERED TO BE RELEVANT

| Category* | Citation of document, with indication, where appropriate, of the relevant passages | Relevant to claim No. |
|---|---|---|
| | (Family: none) | |
| A | JP, 4-328549, A (Nikon Corporation), 17 November, 1992 (17.11.92), description; Par. Nos. 0017 to 0023; Figs. 1 to 5 (Family: none) | 1-6 |

Form PCT/ISA/210 (continuation of second sheet) (July 1992)